# EUROPEAN PATENT SPECIFICATION

(11) **EP 3 529 088 B1**
(45) Date of publication and mention of the grant of the patent: **27.07.2022**
(21) Application number: 17861949.0
(22) Date of filing: 20.10.2017
(51) Int. Cl.: B60C 23/04, B60C 23/00, B60B 35/00

(54) **TIRE INFLATION SYSTEM VISUAL FLOW INDICATOR**
VISUELLER INDIKATOR FÜR REIFENFÜLLSYSTEM
INDICATEUR VISUEL DE DÉBIT DE SYSTÈME DE GONFLAGE DE PNEU

(30) Priority: 20.10.2016 US 201662410765 P
(43) Date of publication of application: 28.08.2019
(73) Proprietor: Equalaire Systems, Inc., Corpus Christi, TX 78409 (US)
(72) Inventor: SHARKEY, James, San Antonio, TX 78219 (US)
(74) Representative: J A Kemp LLP
(86) International application number: PCT/US2017/057643
(87) International publication number: WO 2018/075919

(56) References cited:
- WO-A1-2013/142158
- WO-A2-2007/032012
- US-A1- 2006 018 766
- US-A1- 2006 179 929
- US-A1- 2012 212 039
- US-A1- 2013 306 192
- US-B1- 7 530 379

## Description

### CROSS-REFERENCE TO RELATED APPLICATION

This application claims priority to US Provisional Patent Application No. 62/410,765 entitled "Tire Inflation System Visual Flow Indicator" filed October 20, 2016.

### FIELD

This application relates generally to vehicle tire inflation.

### BACKGROUND

Automatic tire inflation systems may be used to maintain vehicle tire pressure by adding air to the vehicle's tires without need for a human operator to inflate the tires from an air pressure source external to the vehicle, such as a maintenance shop air supply. When a leak occurs, an operator must inspect all tires of the vehicle to determine which tire in the system requires attention. The current methods of attempting to identify the leak through audible and tactile indicators is inexact and time consuming.

Thus, there exists a need for a device that allows the operator and/or technician to identify the tire that is leaking with speed and accuracy.

US Publication Number 20060179929 describes a tire inflation system including a rotary air chamber secured to a hubcap. The rotary air chamber is configured to inject air into at least one tire when tire air pressure drops below a first adjustable preset value and to release air from the at least one tire when tire air pressure rises above a second adjustable preset value. A pressure gauge allows for visual inspection of the current pressure for the tire.

US Patent No. 7,530,379 describes an automatic device which supplies air to tractor trailer tires using an onboard air supply. This air, supplied to the rotary air chamber system can be adjusted to a desired tire air pressure by the individual driver to suitable levels of load weights, climates, travel speed and terrain. Rotating tires at high speeds build up friction raising tire pressure to dangerous levels. To maintain and verify tire pressures each tire is protected by check valves and visible pressure gauges.

International publication WO2013/142158 describes a tire inflation system including a pump system. The pump system can include a relief valve which may function to leak air from the tire interior to a housing of the pump or to the ambient environment. A measurement element may be fluidly coupled to the relief valve and can include a sensor and a display.

International publication WO/2007/032012 describes a device for inflating a deflated vehicle tire which comprises a tube, a first adapter and a second adapter disposed at each end of the tube. The adapters are suitable for connecting to a valve of a vehicle tire, facilitating air flow, and an air-flow indicator which indicate existence of air-flow within the tube.

### BRIEF DESCRIPTION OF THE DRAWINGS

FIG. 1 illustrates an embodiment of a vehicle having a plurality of inflation manifolds mounted thereto.
FIG. 2 illustrates an embodiment of an inflation system with flow indicators installed.
FIG. 3 illustrates a flow indicator incorporated into a rotary union.
FIG. 4 illustrates a flow indicator based on an observable turbine.
FIG. 5 illustrates a flow indicator based on disturbable pellets.
FIG. 6 illustrates a flow indicator based on a lighted indicator.
FIG. 7 illustrates a flow indicator based on a flow meter.

### DETAILED DESCRIPTION

Aspects of the invention are set out in the appended independent claims.

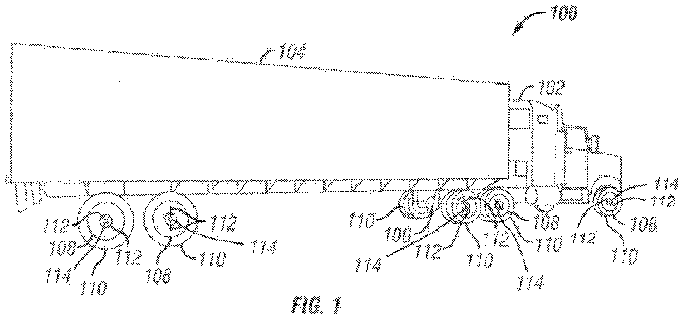

As may be seen in FIG. 1, a vehicle **100** may comprise any vehicle having dual tires, such as semi-trucks, heavy-duty pickup trucks, RVs, dump trucks, and class 7 and 8 trailers to name a few. In the embodiment of FIG. 1, the vehicle may comprise a truck **102** and a trailer **104.** The truck **102** may include one or more drive axles **106** as part of the truck's powertrain. The truck **102** may further include a steer axle having pivotable spindles that may provide steering capability for the vehicle **100.** The trailer **104** may include one or more fixed axles. Each trailer and truck axle may have single or dual wheels **108** mounted at each end. Steer axles may have a single wheel **108.** A pneumatic tire **110** may be mounted to each wheel **108.**

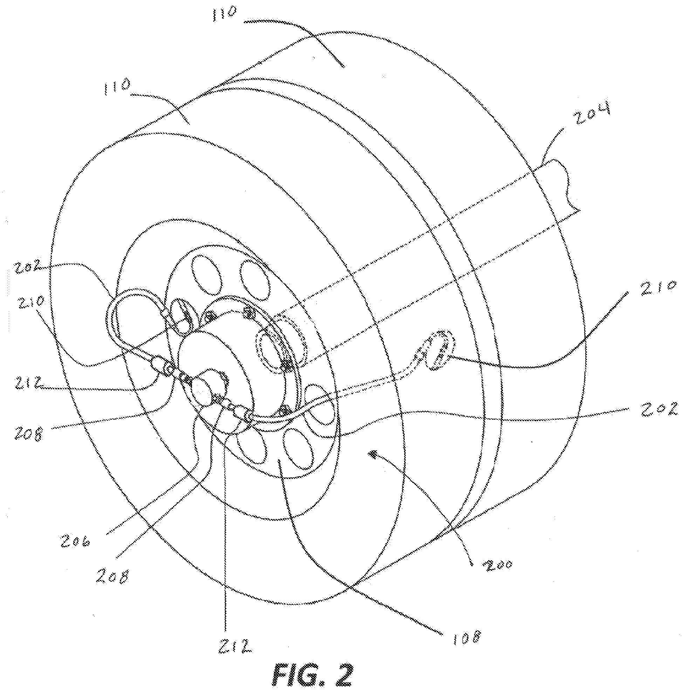

As may be seen in FIG. 2, an inflation system **200** may be installed at the wheel end. The inflation system **200** may include air hose **202,** rotary union **206,** a hose fitting **208,** tire valve stems **210,** and flow indicators **212** as appropriate. Pressurized fluid may be delivered from a pressure source on the vehicle to the rotary union through the axle **204** or an air line external to the wheel end.

As seen in FIG. 2, the sight flow indicator **212** may be a visual aid provided in fluid communication between the rotary union **206** and the tire valve stem **210** of the inflation system. A flow indicator **212** may be located in series with any of the other fluid-conveying components of the inflation system **200.** In some embodiments, the flow indicator **212** may be located near to the center of rotation of the inflation system, such as near the rotary union. Such location may serve to reduce additional centripetal forces and moments generated by the added mass of the flow indicator **212.** In other embodiments, the location of the flow indicator **212** may be at any point between the rotary union and the tire valve. In some embodiments, a flow indicator may be part of the rotary union housing. The flow indicator **212** may be a separate component in the system or be an integral part of the air hose **202.** The flow indicator **212** may give a visual alert of which tire **110** on the vehicle is leaking.

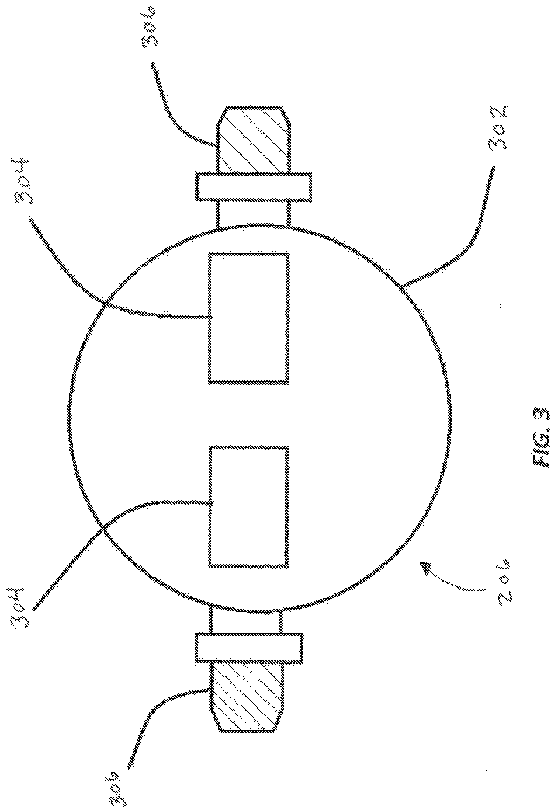

As can be seen in FIG. 3, a flow indicator **304** may be located at a central point on the axis of wheel rotation, such as at the rotary union. A flow indicator **304** may be located in the rotary union next to each of the ports **306.** As pressurized fluid flows in the rotary union **302** and out through a port **306** to a corresponding tire via air hose, the visual indicator may indicate fluid flow. For rotary unions provided inside a hubcap, or integrated into a hub cap, one or more visual indicators may be disposed on or built into the hubcap so that air passing through fluid channels in the hubcap may activate the flow indicator. For example, a visual indicator may be made visible through the sight glass of a rotary union hubcap.

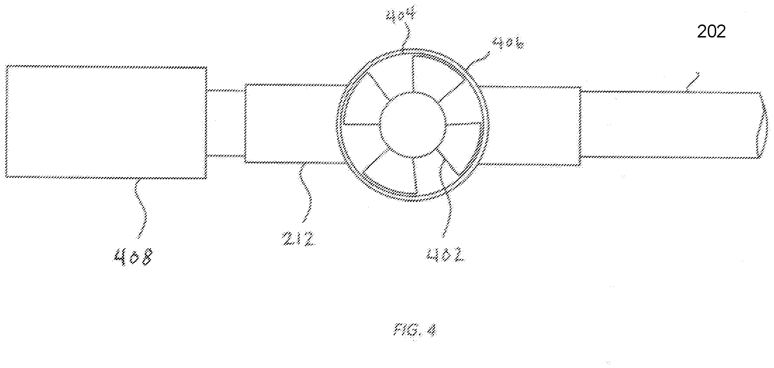

As seen in FIG. 4, the visual alert mechanism of the flow indicator **212** may comprise a turbine **402** that actuates when exposed to a fluid flow and may be observed through an observation window **404** in the flow indicator body **406.** The paddle rotor or turbine **402** may employ different colors on alternating blades to facilitate ease in discerning a flow indication. The flow indicator **212** may be located inline with or part of an air hose **202,** and may be disposed adjacent a hose connection **408.**

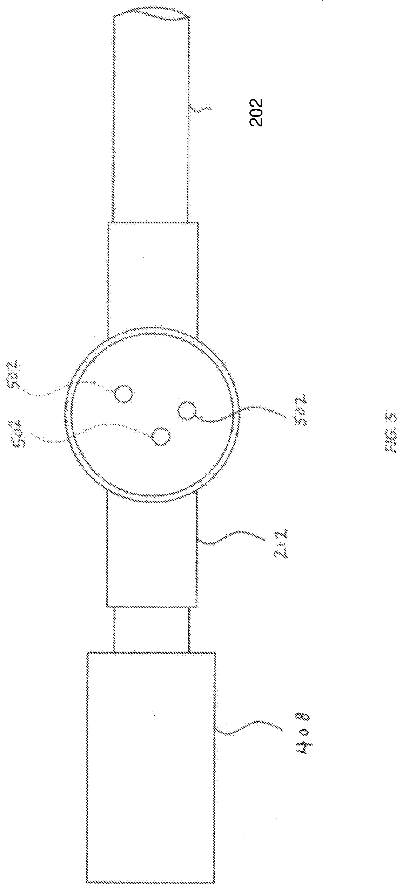

As seen in FIG. 5, other visual alert mechanisms for the flow indicator **212** may rely on pellets **502** of any suitable material, such as plastic or low density metals, that are agitated in the presence of a fluid flow. These pellets may be of a color that draws attention to the pellets **502** when they are agitated. These pellets **502** may range in number from a single pellet **502** to a plurality of pellets **502** in a single indicator. Other agitatable objects may be used, as well, such as ribbons, sliding or lifting cylinders or balls, and confetti.

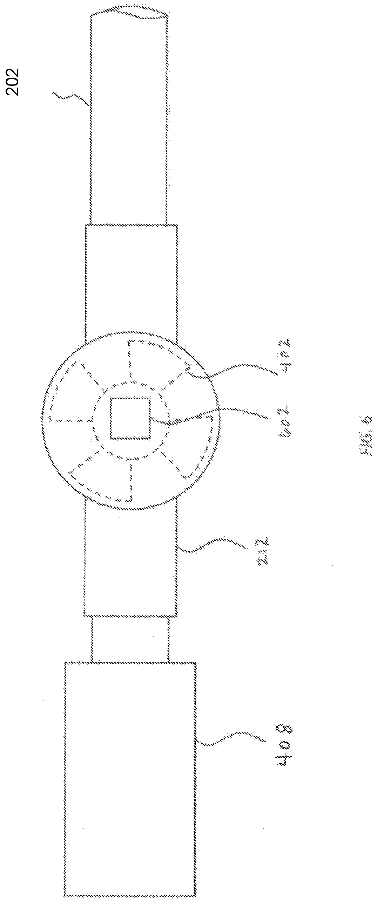

As can be seen in FIG. 6, a lighted indicator **602** that is activated when a fluid flow is present in the indicator body may be provided. These indicator mechanisms may also be used in combination, such as but not limited to, a fluid-flow-powered turbine **402** connected to an electrical generator that may provide the power signal for an external lighted indicator **602.** An energy storage device, such as a battery or capacitor, may store electrical energy from the generator so that the light may remain illuminated after the turbine stops turning. The indicator may include a reset button that allows an operator to turn off the light after checking the tire.

In other embodiments, a flow switch may activate the lighted indicator. A flow switch may be of any suitable type, such as a paddle switch, a thermal flow sensor, a shuttle or piston switch, or a piezo flow switch. A turbine generator, or solar power source, or battery or other suitable power source may be used to provide power. Use of a switch that indicates flow at a specific flow rate may provide an indication of the severity of a tire leak. In some embodiments, the lighted indicator may be statefully controlled so as to indicate the tire to which fluid has flowed even if the flow has stopped (such as when the tire inflation system has shut off).

In other embodiments, an electronic display may be used in place of or in addition to the lighted indicator. Various flow data, such as flow rate, flow start time, flow stop time, direction of flow, and flow log may be displayed for an operator. Any visual indication method for the inline and in series flow indicator **212** may be appropriate for a centrally located flow indicator **212** such as may be located in the rotary union **206.**

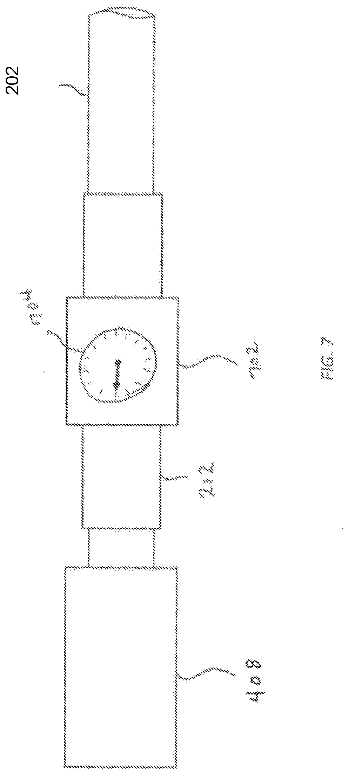

As can be seen in FIG. 7, the flow indicator **212** may utilize a flow meter **702** indicating positive displacement, differential pressure, velocity, mass or other applicable measurement variables. The flow meter **702** may indicate the scalar quantity of air flow in the inflation system **200.** The flow meter **702** may indicate flow through a gauge **704** of either an analog or digital nature. This gauge **704** may convey measurement data through analog display or through a digital nature. A flow indicator **212** of such a nature may allow the operator to gauge the magnitude and nature of any leak the inflation system may be attempting to overcome for the tire in question.

Although the disclosed subject matter and its advantages have been described, the invention is defined by the appended claims.

## Claims

1. An automatic tire inflation system (200) comprising:
a source of pressurized fluid;
a first pneumatic tire (110) having a valve stem (210) configured to receive pressurized fluid;
a rotary air connection (206) in sealed fluid communication between the source of pressurized fluid and the first pneumatic tire;
the automatic tire inflation system being **characterized by**:
a first visual flow indicator (212, 304) disposed in a path of sealed fluid communication between the rotary air connection and the first pneumatic tire;
said first visual flow indicator comprising at least one of a digital display coupled to a flow switch for activating a first lighted indicator, the first lighted indicator being statefully controlled so as to indicate fluid flow above a threshold fluid flow rate, a visual alert mechanism configured to be observably moved by air flow, and a flow meter.

2. The system of claim 1, the rotary air connection (206) comprising the first visual flow indicator (304).

3. The system of claim 1, further comprising an air hose (202) forming the path of sealed fluid communication, the air hose having a first end in sealed connection with the rotary air connection (206) and a second end in sealed connection with the valve stem (210), the first visual flow indicator (212) being disposed either between the rotary air connection and the first end of the air hose, or between the valve stem and the second end of the air hose.

4. The system of claim 1, further comprising an air hose (202) forming the path of sealed fluid communication, the air hose comprising the first visual flow indicator (212).

5. The system of claim 1, the rotary air connection comprising a hubcap having an integrated rotary union (206).

6. The system of claim 1, the rotary air connection (206) comprising a hubcap having a rotary union disposed therein.

7. The system of claim 1, further comprising a second visual flow indicator (212) disposed in a second path of sealed fluid communication between the rotary air connection (206) and a second pneumatic tire (110).

8. The system of claim 7, the rotary air connection (206) comprising the second visual flow indicator (212).

9. The system of claim 7 or claim 8, wherein the first pneumatic tire (110) and the second pneumatic tire (110) are components of a dual wheel (108) assembly for a vehicle (100), each of the first pneumatic tire (110) and the second pneumatic tire (110) being in sealed communication with the rotary air connection (206), the first visual flow indicator (212) and second visual flow indicator (212) each being configured to facilitate identification of which tire is leaking pressurized fluid in the event that at least one of the first pneumatic tire (110) and the second pneumatic tire (110) becomes damaged so as to leak pressurized fluid.

10. The system of claim 9, wherein said second visual flow indicator comprises at least one of a digital display coupled to a flow switch for activating a second lighted indicator, the second lighted indicator being statefully controlled so as to indicate fluid flow above a threshold fluid flow rate, a visual alert mechanism configured to be observably moved by air flow, and a flow meter.

11. The system of claim 1, said first visual flow indicator (212) being the visual alert mechanism configured to be observably moved by air flow.

12. The system of claim 11, said first visual flow indicator (212) comprising a sliding or lifting cylinder.

13. The system of claim 11, said first visual flow indicator (212) comprising a sliding or lifting ball.

14. The system of claim 11, said first visual flow indicator (212) comprising a paddle rotor (402).

15. The system of claim 11, said first visual flow indicator (212) comprising a ribbon.

16. The system of claim 11, said first visual flow indicator (212) comprising confetti.

17. The system of claim 11, said first visual flow indicator (212) comprising one or more pellets (502).

18. An air hose (202) configured to convey pressurized air from a rotary union (206) to a pneumatic tire (110), the air hose comprising a visual flow indicator (212, 304), the air hose **characterized in that** said visual flow indicator comprises a lighted indicator statefully controlled so as to indicate fluid flow above a threshold fluid flow rate.

19. A hubcap comprising:
an air hose port (306);
a fluid channel configured to convey pressurized air from a rotary connection (206) to the air hose port;
the hubcap **characterized by**:
a visual flow indicator (212, 304) disposed so as to detect fluid flow in the fluid channel;
said visual flow indicator comprising at least one of a digital display coupled to a flow switch for activating a lighted indicator, the lighted indicator being statefully controlled so as to indicate fluid flow above a threshold fluid flow rate, a visual alert mechanism configured to be observably moved by air flow, and a flow meter.

20. The hubcap of claim 19 including a second air hose port (306) and a second fluid channel configured to convey pressurized air from said rotary air connection (206) to said second air hose port, the hubcap having a second visual flow indicator (212, 304) disposed so as to detect fluid flow in the second fluid channel.

## Patentansprüche

1. Automatisches Reifenfüllsystem (200), das Folgendes umfasst:
eine Druckfluidquelle;
einen ersten Luftreifen (110) mit einem Ventilschaft (210), der dafür konfiguriert ist, unter Druck stehendes Fluid aufzunehmen;
eine Drehluftverbindung (206) in abgedichteter Fluidverbindung zwischen der Druckfluidquelle und dem ersten Luftreifen;
wobei das automatische Reifenfüllsystem **gekennzeichnet ist durch**:
einen ersten visuellen Strömungsanzeiger (212, 304), der in einem Weg einer abgedichteten Fluidverbindung zwischen der Drehluftverbindung und dem ersten Luftreifen angeordnet ist;
wobei der erste visuelle Strömungsanzeiger mindestens eines von Folgendem umfasst: eine digitale Anzeige, die mit einem Strömungsschalter zum Aktivieren eines ersten beleuchteten Anzeigers gekoppelt ist, wobei der erste beleuchtete Anzeiger zustandsmäßig gesteuert wird, um eine Fluidströmung über einer Schwellenwert-Fluidströmungsrate anzuzeigen, einen visuellen Warnmechanismus, der dafür konfiguriert ist, **durch** den Luftströmung beobachtbar bewegt zu werden, und einen Strömungsmesser.

2. System nach Anspruch 1, wobei die Drehluftverbindung (206) den ersten visuellen Strömungsanzeiger (304) umfasst.

3. System nach Anspruch 1, das ferner einen Luftschlauch (202) umfasst, der den Weg der abgedichteten Fluidverbindung bildet, wobei der Luftschlauch ein erstes Ende in abgedichteter Verbindung mit dem Drehluftanschluss (206) und ein zweites Ende in abgedichteter Verbindung mit dem Ventilschaft (210) aufweist, wobei der erste optische Strömungsanzeiger (212) entweder zwischen dem Drehluftanschluss und dem ersten Ende des Luftschlauchs oder zwischen dem Ventilschaft und dem zweiten Ende des Luftschlauchs angeordnet ist.

4. System nach Anspruch 1, das ferner einen Luftschlauch (202) umfasst, der den Weg der abgedichteten Fluidverbindung bildet, wobei der Luftschlauch den ersten visuellen Strömungsanzeiger (212) umfasst.

5. System nach Anspruch 1, wobei die Drehluftverbindung eine Radkappe mit einer integrierten Drehdurchführung (206) umfasst.

6. System nach Anspruch 1, wobei die Drehluftverbindung (206) eine Radkappe mit einer darin angeordneten Drehdurchführung umfasst.

7. System nach Anspruch 1, das ferner einen zweiten visuellen Strömungsanzeiger (212) umfasst, der in einem zweiten Weg einer abgedichteten Fluidverbindung zwischen der Drehluftverbindung (206) und einem zweiten Luftreifen (110) angeordnet ist.

8. System nach Anspruch 7, wobei die Drehluftverbindung (206) den zweiten visuellen Strömungsanzeiger (212) umfasst.

9. System nach Anspruch 7 oder Anspruch 8, wobei der erste Luftreifen (110) und der zweite Luftreifen (110) Komponenten einer Zwillingsradanordnung (108) für ein Fahrzeug (100) sind, wobei sowohl der erste Luftreifen (110) als auch der zweite Luftreifen (110) in abgedichteter Verbindung mit der Drehluftverbindung (206) stehen, wobei der erste visuelle Strömungsanzeiger (212) und der zweite visuelle Strömungsanzeiger (212) jeweils dafür konfiguriert sind, die Identifizierung zu erleichtern, welcher Reifen unter Druck stehendes Fluid verliert, für den Fall, dass mindestens einer des ersten Luftreifens (110) und des zweiten Luftreifens (110) beschädigt wird, so dass unter Druck stehendes Fluid austritt.

10. System nach Anspruch 9, wobei der zweite visuelle Strömungsanzeiger mindestens eines von Folgendem umfasst: eine digitale Anzeige, die mit einem Strömungsschalter zum Aktivieren eines zweiten beleuchteten Anzeigers gekoppelt ist, wobei der zweite beleuchtete Anzeiger zustandsmäßig gesteuert wird, um Folgendes anzuzeigen: eine Fluidströmung über einer Schwellenwert-Fluidströmungsrate, einen visuellen Warnmechanismus, der dafür konfiguriert ist, durch den Luftströmung beobachtbar bewegt zu werden, und einen Strömungsmesser.

11. System nach Anspruch 1, wobei der erste visuelle Strömungsanzeiger (212) der visuelle Warnmechanismus ist, der dafür konfiguriert ist, durch den Luftstrom sichtbar bewegt zu werden.

12. System nach Anspruch 11, wobei der erste visuelle Strömungsanzeiger (212) einen Schiebe- oder Hubzylinder umfasst.

13. System nach Anspruch 11, wobei der erste visuelle Strömungsanzeiger (212) eine Schiebe- oder Hubkugel umfasst.

14. System nach Anspruch 11, wobei der erste visuelle Strömungsanzeiger (212) einen Schaufelrotor (402) umfasst.

15. System nach Anspruch 11, wobei der erste visuelle Strömungsanzeiger (212) ein Band umfasst.

16. System nach Anspruch 11, wobei der erste visuelle Strömungsanzeiger (212) Konfetti umfasst.

17. System nach Anspruch 11, wobei der erste visuelle Strömungsanzeiger (212) ein oder mehrere Pellets (502) umfasst.

18. Luftschlauch (202), der dafür konfiguriert ist, Druckluft von einer Drehdurchführung (206) zu einem Luftreifen (110) zu befördern, wobei der Luftschlauch einen optischen Strömungsanzeiger (212, 304) umfasst, wobei der Luftschlauch **dadurch gekennzeichnet ist, dass** der visuelle Strömungsanzeiger einen beleuchteten Anzeiger umfasst, der zustandsmäßig so gesteuert wird, dass er einen Fluidströmung über einem Schwellenwert der Fluidströmungsrate anzeigt.

19. Radkappe, die Folgendes umfasst:
einen Luftschlauchanschluss (306);
einen Fluidkanal, der dafür konfiguriert ist, Druckluft von einer Drehverbindung (206) zum Luftschlauchanschluss zu befördern;
wobei die Radkappe durch Folgendes gekennzeichnet ist:
einen visuellen Strömungsanzeiger (212, 304), der dafür ausgelegt ist, die Fluidströmung in dem Fluidkanal zu erfassen;
wobei der visuelle Strömungsanzeiger mindestens eines der Folgenden umfasst:
eine digitale Anzeige, die mit einem Strömungsschalter zum Aktivieren eines beleuchteten Anzeigers gekoppelt ist, wobei der beleuchtete Anzeiger zustandsmäßig gesteuert wird, um eine Fluidströmung über einer Schwellenwert-Fluidströmungsrate anzuzeigen, einen visuellen Warnmechanismus, der dafür konfiguriert ist, durch die Luftströmung beobachtbar bewegt zu werden, und einen Strömungsmesser.

20. Radkappe nach Anspruch 19, die einen zweiten Luftschlauchanschluss (306) und einen zweiten Fluidkanal umfasst, die dafür konfiguriert sind, Druckluft von der Drehluftverbindung (206) zum zweiten Luftschlauchanschluss zu befördern, wobei die Radkappe einen zweiten visuellen Strömungsanzeiger (212, 304) aufweist, der dafür ausgelegt ist, den Fluidströmung in dem zweiten Fluidkanal zu erfassen.

## Revendications

1. Système de gonflage automatique de pneumatique (200) comprenant :
une source de fluide sous pression ;
un premier pneumatique (110) ayant une tige de soupape (210) configurée pour recevoir un fluide sous pression ;
une connexion pneumatique rotative (206) en communication fluidique étanche entre la source de fluide sous pression et le premier pneumatique ;
le système de gonflage automatique de pneumatique étant **caractérisé par** :
un premier indicateur visuel d'écoulement (212, 304) disposé dans un chemin de communication fluidique étanche entre la connexion pneumatique rotative et le premier pneumatique ;
ledit premier indicateur de d'écoulement visuel comprenant au moins l'un parmi un affichage numérique couplé à un commutateur d'écoulement pour activer un premier indicateur lumineux, le premier indicateur lumineux étant commandé par état de manière à indiquer un écoulement de fluide au-dessus d'un débit de fluide seuil, un mécanisme d'alerte visuel configuré pour être déplacé de manière observable par l'écoulement d'air, et un débitmètre.

2. Système selon la revendication 1, laconnexion pneumatique rotative (206) comprenant le premier indicateur visuel d'écoulement (304).

3. Système selon la revendication 1, comprenant en outre un tuyau d'air (202) formant le chemin de communication fluidique étanche, le tuyau d'air ayant une première extrémité en connexion étanche avec la connexion pneumatique rotative (206) et une seconde extrémité en connexion étanche avec la tige de soupape (210), le premier indicateur visuel d'écoulement (212) étant disposé soit entre laconnexion pneumatique rotative et la première extrémité du tuyau d'air, soit entre la tige de soupape et la seconde extrémité du tuyau d'air.

4. Système selon la revendication 1, comprenant en outre un tuyau d'air (202) formant le chemin de communication fluidique étanche, le tuyau d'air comprenant le premier indicateur visuel d'écoulement (212).

5. Système selon la revendication 1, la connexion pneumatique rotative comprenant un enjoliveur comportant un raccord rotatif intégré (206).

6. Système selon la revendication 1, la connexion pneumatique rotative (206) comprenant un enjoliveur dans lequel est disposé un raccord rotatif.

7. Système selon la revendication 1, comprenant en outre un second indicateur visuel d'écoulement (212) disposé dans un second chemin de communication fluidique étanche entre la connexion pneumatique rotative (206) et un deuxième pneumatique (110).

8. Système selon la revendication 7, la connexion pneumatique rotative (206) comprenant le second indicateur visuel d'écoulement (212).

9. Système selon la revendication 7 ou 8, dans lequel le premier pneumatique (110) et le second pneumatique (110) sont des composants d'un ensemble de roues jumelées (108) pour un véhicule (100), chacun du premier pneumatique (110) et du second pneumatique (110) étant en communication étanche avec la connexion pneumatique rotative (206), le premier indicateur visuel de d'écoulement (212) et le second indicateur visuel d'écoulement (212) étant chacun configuré pour faciliter l'identification du pneumatique qui présente une fuite de fluide sous pression dans le cas où au moins l'un du premier pneumatique (110) et du second pneumatique (110) est endommagé de manière à présenter une fuite de fluide sous pression.

10. Système selon la revendication 9, dans lequel ledit second indicateur visuel d'écoulement comprend au moins l'un parmi un affichage numérique couplé à un commutateur d'écoulement pour activer un second indicateur lumineux, le second indicateur lumineux étant commandé par état de manière à indiquer un écoulement de fluide au-dessus d'un débit de fluide seuil, un mécanisme d'alerte visuel configuré pour être déplacé de manière observable par l'écoulement d'air, et un débitmètre.

11. Système selon la revendication 1, ledit premier indicateur visuel d'écoulement (212) étant le mécanisme d'alerte visuel configuré pour être visiblement déplacé par l'écoulement d'air.

12. Système selon la revendication 11, ledit premier indicateur visuel d'écoulement (212) comprenant un cylindre de coulissement ou de levage.

13. Système selon la revendication 11, ledit premier indicateur visuel d'écoulement (212) comprenant une bille de coulissement ou de levage.

14. Système selon la revendication 11, ledit premier indicateur visuel d'écoulement (212) comprenant un rotor à aubes (402).

15. Système selon la revendication 11, ledit premier indicateur visuel d'écoulement (212) comprenant un ruban.

16. Système selon la revendication 11, ledit premier indicateur visuel d'écoulement (212) comprenant des confettis.

17. Système selon la revendication 11, ledit premier indicateur visuel d'écoulement (212) comprenant une ou plusieurs pastilles (502).

18. Tuyau d'air (202) configuré pour transporter de l'air sous pression d'un raccord rotatif (206) à un pneumatique (110), le tuyau d'air comprenant un indicateur visuel de d'écoulement (212, 304), le tuyau d'air étant **caractérisé en ce que** ledit indicateur visuel d'écoulement comprend un indicateur lumineux commandé par état de manière à indiquer un écoulement de fluide au-dessus d'un débit de fluide seuil.

19. Enjoliveur comprenant :
un orifice de tuyau d'air (306) ;
un canal de fluide configuré pour transporter de l'air sous pression depuis un raccord rotatif (206) vers l'orifice de tuyau d'air ;
l'enjoliveur étant **caractérisé par** :
un indicateur visuel d'écoulement (212, 304) disposé de manière à détecter l'écoulement de fluide dans le canal de fluide ;
ledit indicateur d'écoulement visuel comprenant au moins l'un parmi un affichage numérique couplé à un commutateur d'écoulement pour activer un indicateur lumineux, l'indicateur lumineux étant commandé par état de manière à indiquer un écoulement de fluide au-dessus d'un débit de fluide seuil, un mécanisme d'alerte visuel configuré pour être déplacé de manière observable par l'écoulement d'air, et un débitmètre.

20. Enjoliveur selon la revendication 19 comprenant un second orifice de tuyau d'air (306) et un second canal de fluide configuré pour acheminer de l'air sous pression depuis ladite connexion pneumatique rotative (206) vers ledit second orifice de tuyau d'air, l'enjoliveur ayant un second indicateur visuel d'écoulement (212, 304) disposé de manière à détecter un écoulement de fluide dans le second canal de fluide.
